(19) Europäisches Patentamt
European Patent Office
Office européen des brevets

(11) **EP 1 664 849 B1**

(12) **EUROPÄISCHE PATENTSCHRIFT**

(45) Veröffentlichungstag und Bekanntmachung des Hinweises auf die Patenterteilung:
**28.02.2007 Patentblatt 2007/09**

(51) Int Cl.:
*G01V 8/02* (2006.01)     *G01M 3/00* (2006.01)

(21) Anmeldenummer: **04787022.5**

(22) Anmeldetag: **25.09.2004**

(86) Internationale Anmeldenummer:
**PCT/EP2004/010801**

(87) Internationale Veröffentlichungsnummer:
**WO 2005/031391 (07.04.2005 Gazette 2005/14)**

(54) **VERFAHREN ZUM ORTEN VON OBJEKTEN IN FORM VON GASAUSTRITTEN AN DER ERDOBERFLÄCHE**

METHOD FOR LOCALISING OBJECTS IN THE FORM OF GAS OUTLETS ON THE SURFACE OF THE EARTH

PROCEDE DE LOCALISATION D'OBJETS SOUS LA FORME DE SORTIES DE GAZ A LA SURFACE DE LA TERRE

(84) Benannte Vertragsstaaten:
**AT BE BG CH CY CZ DE DK EE ES FI FR GB GR HU IE IT LI LU MC NL PL PT RO SE SI SK TR**

(30) Priorität: **25.09.2003   DE 10344748**

(43) Veröffentlichungstag der Anmeldung:
**07.06.2006   Patentblatt 2006/23**

(73) Patentinhaber: **Deutsches Zentrum für Luft- und Raumfahrt e.V.**
**51147 Köln (DE)**

(72) Erfinder: **TANK, Volker**
**82279 Eching (DE)**

(74) Vertreter: **von Kirschbaum, Albrecht**
**Patentanwalt**
**Postfach 1520**
**82102 Germering (DE)**

(56) Entgegenhaltungen:
**WO-A-99/54700          DE-A- 19 744 164**
**US-A- 4 678 911**

- **PATENT ABSTRACTS OF JAPAN Bd. 1995, Nr. 01, 28. Februar 1995 (1995-02-28) -& JP 06 288858 A (OSAKA GAS CO LTD), 18. Oktober 1994 (1994-10-18)**
- **"GAS VISUALIZATION TECHNOLOGY PROVIDES EFFICIENT LEAK DETECTION" OFFSHORE, PETROLEUM PUBLISHING CO. TULSA, US, Bd. 62, Nr. 3, März 2002 (2002-03), Seite 94, XP001116577 ISSN: 0030-0608**

**Beschreibung**

Technisches Gebiet

Die Erfindung betrifft ein Verfahren zum Orten von Objekten in Form von Gasaustritten an der Erdoberfläche nach dem Oberbegriff des Anspruchs 1.

Stand der Technik

In verschiedenen Regionen der Erde treten Gase, wie beispielsweise $CO_2$, $SO_2$, usw. an der Erdoberfläche aus. Unter anderem können diese Gase ihren Ursprung in aktiven magmatischen Reservoirs des Erdmantels haben, sind oft an seismische und vulkanische Aktivität geknüpft, oder sind als subvulkanische Erscheinungen von Mantelfluiden zu werten. Die Gasaustrittsgebiete können daher durch Erdbeben oder Vulkanausbrüche bedroht sein.

Aus zwei Gründen besteht Interesse, die Gasaustritte zu erkennen und zu überwachen: Einerseits spielen Gase in seismischen und vulkanischen Vorgängen eine große Rolle, zu deren wissenschaftlichem Verständnis die Kenntnis und Überwachung aller Austritte wünschenswert ist. Andererseits können Veränderungen der Gasaustritte, wie Änderungen des Gasflusses und/oder der Gaszusammensetzung möglicherweise in Zusammenhang mit bevorstehenden Beben oder Ausbrüchen stehen und ihre Überwachung daher eventuell zur Frühwarnung genutzt werden.

Die Gasaustritte finden sich in der weiteren Umgebung geologisch markanter Strukturen irgendwo im Gelände, oder aber an den Flanken aktiver oder ruhender/erloschener Vulkane. Die Gasaustritte sind unterschiedlicher Natur: trockene Mofetten/Fumarolen, Wassermofetten, Mineralwässer. Insbesondere der Austritt über trockene Mofetten ist häufig diffus und daher schwer zu entdecken.

Die bisher bekannten Austritte wurden durch Geländebegehung gefunden. Ihre großräumige Suche mit Hilfe von Fernerkundungssystemen von Luftfahrzeugen oder Satelliten aus wäre wünschenswert, ist bisher aber nicht möglich. Gasflussüberwachungen werden nur punktuell an Wassermofetten und Mineralquellen durchgeführt, wobei in aller Regel Gassammelvorrichtungen zum Einsatz kommen. Es sind jedoch auch kontinuierliche Gasflussmessungen an trockenen Austritten und auch bei aggressiven Gasen (beispielsweise $SO_2$) wünschenswert.

Ein zuverlässiges Frühwarnverfahren und -system auf der Basis von Messungen verschiedener Parameter in Erdbeben- und Vulkangebieten und unter Einbeziehung ausgedehnter Gasflussmessungen existiert bisher nicht. Es sind daher kontinuierlich arbeitende automatische Messsysteme des Gasflusses zu Forschungszwecken und Unterstützung der Methodenentwicklung für mögliche Frühwarnsysteme vor Beben und Ausbrüchen erforderlich.

Bedarf ist auch für ein System, mit dem Gasaustritte an der Erdoberfläche aus undichten Gasleitungen fernerkundet werden können, um dadurch die Gasleitungen zu überwachen und eventuelle Lecks in den Gasleitungen zu finden.

Darstellung der Erfindung

Aufgabe der Erfindung ist es, zum einen hinsichtlich Lage und Größe nicht bekannte Objekte in Form von Gasaustritten zu suchen und zum anderen die Ausdehnung von gefundenen, gegebenenfalls auch bereits bekannten Gasaustritten zu bestimmen. Ferner sollen fernerkundlich Gasaustritte aus undichten Gas/Erdgasleitungen erkannt werden.

Gemäß der Erfindung ist diese Aufgabe bei einem Verfahren zum Orten von Objekten in Form von Gasaustritten an der Erdoberfläche nach dem Oberbegriff des Anspruchs 1 durch die Verfahrensschritte im kennzeichnenden Teil des Anspruchs 1 gelöst. Vorteilhafte Weiterbildungen sind Gegenstand der auf Anspruch 1 unmittelbar oder mittelbar rückbezogen Ansprüche.

Beschreibung der Zeichnungen

Die nachfolgenden Zeichnungen zeigen:

Fig.1        eine Darstellung von sich im Verlauf der Jahreszeiten verändernden Bodenprofilen;

Fig.2        eine Schwarz/Weiß-Wiedergabe einer Farbaufnahme einer bekannten Versuchsanordnung, und

Fig.3 bis 7    Schwarz/Weiß-Kopien mittels einer Wärmebildkamera zu unterschiedlichen Zeitpunkten aufgenommenen Temperaturbilder.

Beschreibung der Erfindung

Aufgrund von mittels Infrarotsensoren durchgeführter Temperaturmessungen werden folgende Zusammenhänge zu Grunde gelegt. Zunächst wird die Temperatur unbewachsener Bodenoberflächen betrachtet, die tages- und jahreszeitlich aufgrund einer Reihe verschiedener Einflüsse starken Schwankungen unterliegen.

In zeitlicher Hinsicht können drei Klassen von Temperaturschwankungen unterschieden werden, und zwar

1.) die niedrigstfrequenten, periodisch jahreszeitlichen,
2.) die mittelfrequenten, periodisch tageszeitlichen und
3.) die höchstfrequenten, statistischen Temperaturschwankungen.

Die Schwankungen der ersten Klasse sind durch das Klima am Ort bestimmt, die der zweiten Klasse durch das Vorhandensein oder Fehlen des Sonnenlichts, und die der dritten Klasse durch das Wetter. Bei der dritten Klasse sind die direkte und indirekte Sonneneinstrahlung, die durch den Sonnenstand bestimmte Intensität und Dauer, Dynamik der Bewölkung sowie die Orientierung der Bodenfläche zur Sonne, von primärer Bedeutung. Entsprechend unterschiedlich ist die Wirksamkeit der drei Klassen von Temperaturänderungen im Tagesverlauf.

In der Nacht dominieren die niedrigstfrequenten, jahreszeitlich bedingten Temperaturverteilungen. Am Tage, bei völlig bedecktem Himmel und Windstille überlagern sich die Einflüsse der ersten und zweiten Klassen. Die höchstfrequenten Einflüsse der dritten Klasse überlagern zu jeder Jahreszeit sowie Tag und Nacht diejenigen der beiden anderen Klassen; sie dominieren daher am Tage bei wechselhaftem, trockenem, windigem oder sonnigem Wetter die aktuelle Temperaturverteilung.

Herausragend ist dabei der Einfluss von Sonnenschein in Zusammenhang mit ziehenden Wolken und die dadurch verursachten Wechsel von Licht und Schatten. Diese Einflüsse bestimmen vorwiegend die zur Tageszeit auftretenden Temperaturen der Bodenoberfläche. Regen hat eine ausgleichende Wirkung auf die Temperaturverteilung. Außerdem sind die Strahlungsabsorptionseigenschaften der Erdoberfläche von Bedeutung. Einfluss haben die Wärmekapazität und die Wärmeleitfähigkeit des unter der Oberfläche liegenden Bodens, die Bodenfeuchte, die Lufttemperatur, die Windstärke,usw..

Für weitgehend homogene Bodenflächen nicht zu großer Ausdehnung in der Größenordnung von einigen zig Quadratmetern, werden die Einflüsse überall nahezu gleich sein, mit der Folge, dass die auftretenden, zeitlichen Temperaturverläufe auch weitgehend gleich sind. Inhomogene Oberflächen mit Steinen, abgefallenem Laub, Zweigen und Ästen und dadurch beispielsweise auch beschattete Bereiche weisen bei Sonnenschein ausgeprägte, örtliche Inhomogenitäten der Oberflächentemperatur auf.

Von besonderer Bedeutung ist die Tatsache, dass die Stellen, an denen Gase aus der Erde treten, einen zusätzlichen Temperatureinfluss erfahren, der auf der übrigen Fläche nicht vorliegt. Betrachtet werden Gase, die aus großer Tiefe aufsteigen. Es besteht ein System aus Gasquelle, Aufstiegskanälen und Austrittsöffnungen.

In diesem System wird die Temperatur der Gase auf dem Weg zum Austritt von folgenden Parametern bestimmt und beeinflusst:

• der Temperatur $T_{GU}$ von Gasen an ihrem Ursprung,
• der Temperatur $T_{af}$ der durchströmten, tiefen, austrittsfernen Erdschichten,
• der Temperatur $T_{an}$ der durchströmten, austrittsnahen Erdschichten,
• der Wärmeleitfähigkeit $\lambda_E$ der durchströmten Erdschichten, und
• dem Gasfluss $Q_G$.

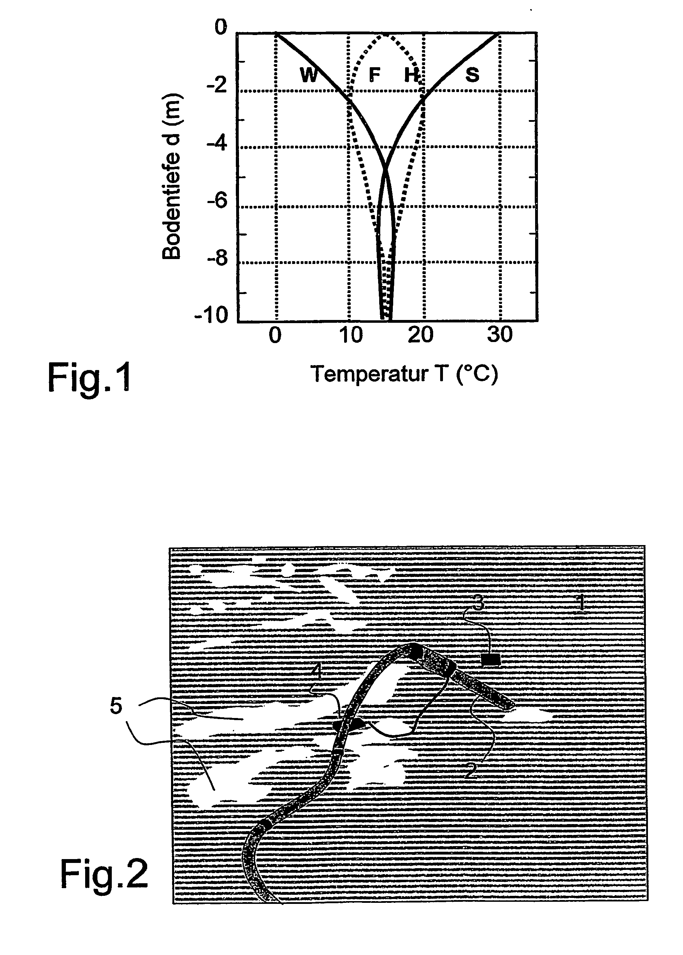

Zur theoretischen Betrachtung wird davon ausgegangen, dass zu Beginn einer Beobachtung der Gasstrom solange mit konstanten Parametern geströmt war, dass sich dadurch ein thermischer Gleichgewichtszustand im System ausgebildet hat. Dieser wird nur im Bereich weniger Meter unter der Bodenoberfläche durch jahreszeitliche Schwankungen der Bodentemperatur beeinflusst, nicht aber über kürzere Zeiträume. Fig.1 zeigt ein solches Temperaturprofil des Bodens, nämlich im Sommer(S), Herbst(H), Winter(W) und Frühling(F). Hierbei sind auf der Abszisse die Temperatur T in °C und auf der Ordinate die Bodentiefe d in Metern (m) aufgetragen.

Die Gase treten daher mit einer konstanten Temperatur $T_{GA}$ aus. Die Oberflächentemperatur des Bodens in einem von Gas/en thermisch beeinflussten Bereich EO sei $T_{EO}$, in der nicht mehr beeinflussten Umgebung einer Austrittsstelle EU sei sie $T_{EU}$. Die Ausgangssituation sei folgende:
Bei konstanter Austrittstemperatur $T_{GA}$, d.h. $T_{GA}$ = const ändert sich die Umgebungstemperatur $T_{EU}$ aufgrund äußerer Einflüsse, wie sie vorstehend im einzelnen aufgeführt sind. Von Interesse ist, wie sich die von Gas/Gasen thermisch beeinflusste Bodenoberflächen-Temperatur $T_{EO}$ in bezug auf die Bodenoberflächen-Temperatur $T_{EU}$ in der nicht mehr beeinflussten Umgebung einer Austrittsstelle einstellt.

Dazu sind drei Fälle zu betrachten:

1.

$$T_{EU}(1) = T_{GA},$$

dann ist:

$$T_{EO}(1) = T_{EU}(1),$$

2.

$$T_{EU}(2) > T_{GA},$$

dann ist:

$$T_{EO}(2) < T_{EU}(2),$$

3.

$$T_{EU}(3) < T_{GA},$$

dann ist:

$$T_{EO}(3) > T_{EU}(3).$$

Daraus folgt:

$$|T_{EO}(3) - T_{EO}(2)| < |T_{EU}(3) - T_{EU}(2)|$$
$$|T_{EO}(3) - T_{EO}(1)| < |T_{EU}(3) - T_{EU}(1)|$$
$$|T_{EO}(2) - T_{EO}(1)| < |T_{EU}(2) - T_{EU}(1)|$$

Das heißt, umweltbedingte Temperaturänderungen wirken sich an Gasaustrittsstellen geringer aus als an anderen Stellen. Die austretenden Gase haben dämpfenden Einfluss auf die Änderungen der Oberflächentemperatur der Austrittsstelle. Das heißt, sie kühlen, wenn die Umgebung wärmer wird, und sie heizen, wenn die Umgebung kälter wird.

Das gilt in ähnlicher Weise für die Gasaustritte aus undichten Leitungen, wie beispielsweise Erdgasleitungen. Das Gas in der Leitung hat die jeweilige Temperatur des Erdreichs in der Tiefe, in der die Leitung liegt. Das Gas steht unter Druck, wird also beim Austritt aus einem Leck expandieren und dadurch abkühlen. Strömt ein konstanter Gasfluss durch das Leck, so wird sich ein thermisches Gleichgewicht zwischen Gas und Erdreich auf dem Weg des Gases an die Oberfläche einstellen. An der Austrittsstelle hat das Gas thermisch dämpfende Wirkung auf die Erdoberfläche. Es gelten auch hier die vorstehend wiedergegebenen Beziehungen.

Gemäß der Erfindung wird die Erdoberfläche im interessierenden Bereich, der sogenannte Szene, mit Wärmebildgeräten/Kameras beobachtet, d.h. es wird die Infrarot-Strahlungsverteilung als Funktion des Ortes aufgenommen. Die auch als Temperaturbilder bezeichneten Wärmebilder werden in bestimmten Zeitabständen wiederholt aufgenommen, wobei Kameraausrichtung und -einstellung nicht verändert wird; es wird also immer exakt derselbe Bereich der Erdoberfläche, nämlich die Szene, mit derselben Aufnahmegeometrie mittels der Wärmebildkamera aufgenommen. Ebenso können vorzugsweise farbige, alternativ auch monochrome Bilder mit einer Video- oder Farb- bzw. Schwarz/Weiß-Bild-Kamera, im sichtbaren Spektralbereich zu jeweils denselben Zeiten von derselben Szene mit derselben Ausrichtung wie die Wärmebilder aufgenommen werden. Parallel werden dazu folgende Wetterparameter kontinuierlich aufgezeichnet: Lufttemperatur, Sonneneinstrahlung (mit Pyrheliometer), Windgeschwindigkeit und -richtung, Bedeckung, Luftdruck, Niederschlag.

Die Wärmebilder werden beispielsweise im Stundenrhythmus Tag und Nacht über einen längeren Zeitraum aufgenommen, wozu die Anordnung automatisiert ist. Hierbei wird die Wärmebildkamera in bekannter Weise in regelmäßigen Zeitabständen radiometrisch kalibriert, was ebenfalls automatisch ablaufen kann. Unter Berücksichtigung der radiometrischen Stabilität der Wärmebildkamera werden diese Zeitabstände so gewählt, dass zu jeder Messung der Szene die relevanten Kalibrierdaten wie Empfindlichkeit und Gerätestrahlung (gain und offset) vorliegen. Mittels dieser Kalibrierdaten werden die Wärmebilder kalibriert, so dass sie in Einheiten der Strahldichte vorliegen. Zur anschaulichen Darstellung wird eine Umrechnung in Temperaturen vorgenommen.

In Fig.2 ist eine Schwarz/Weiß-Wiedergabe einer bekannten Versuchsanordnung dargestellt. (Siehe "Infrared and hyperspectral remote sensing of Earth degassing" von V.Tank et al, Proceedings of ICGG7 (28.08.2003, S.53, 54). In Fig.2 sind in einer Schneefläche 1 vom linken Bildrand ausgehende und bis fast zur Bildmitte reichende Fußspuren 5 zu erkennen. Ferner ist zum Einbringen von $CO_2$ unter die Schneedecke 5 ein Schlauch 2 vorgesehen, dessen vorderes rohrförmiges Ende unter der Schneedecke endet. Mit 3 ist eine außerhalb der Szene auf die Schneedecke 1 gelegte Metallplatte 3 bezeichnet, die als Referenzfläche dient. Mittels eines Temperaturmessgeräts 4 ist die Temperatur des zugeführten Gases $CO_2$ gemessen worden.

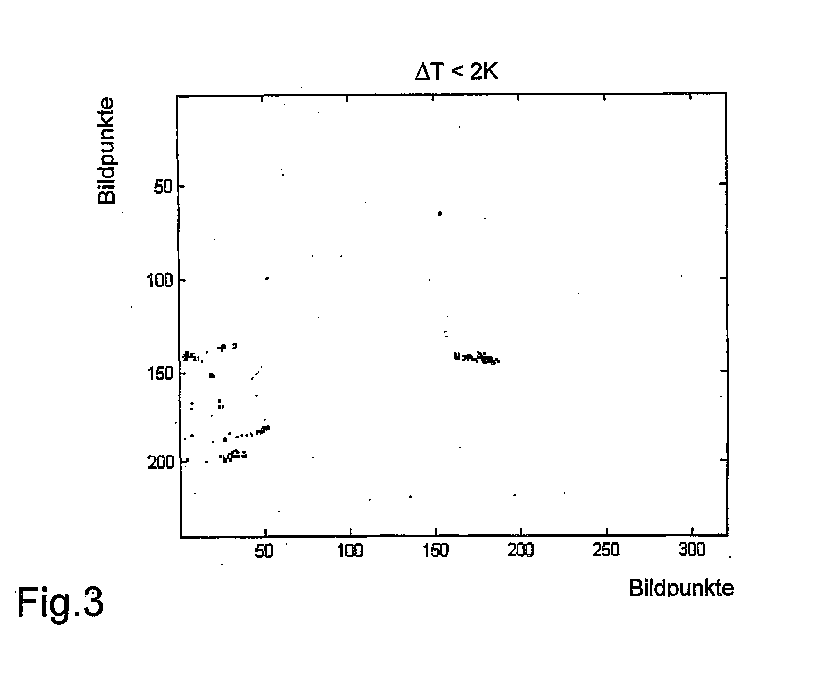

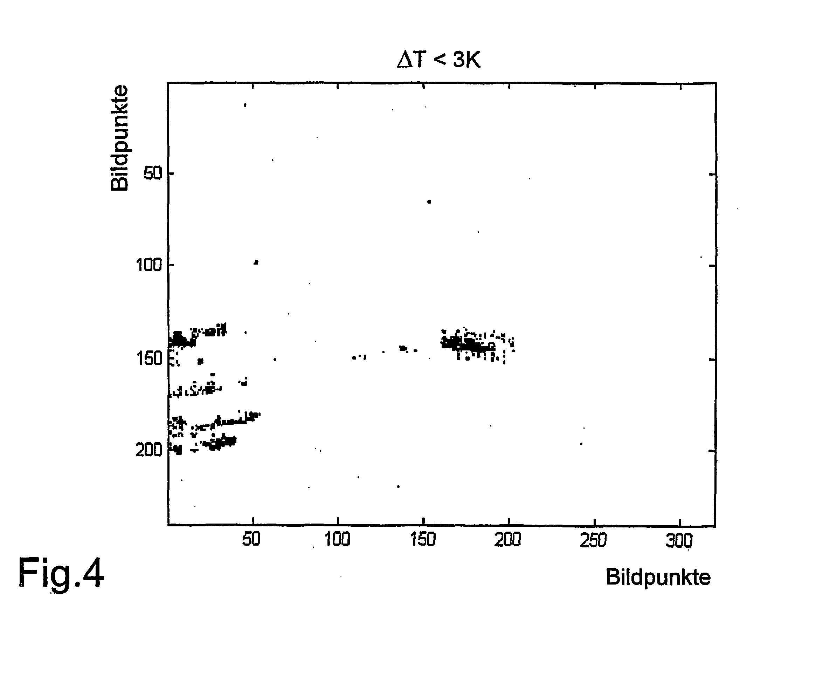

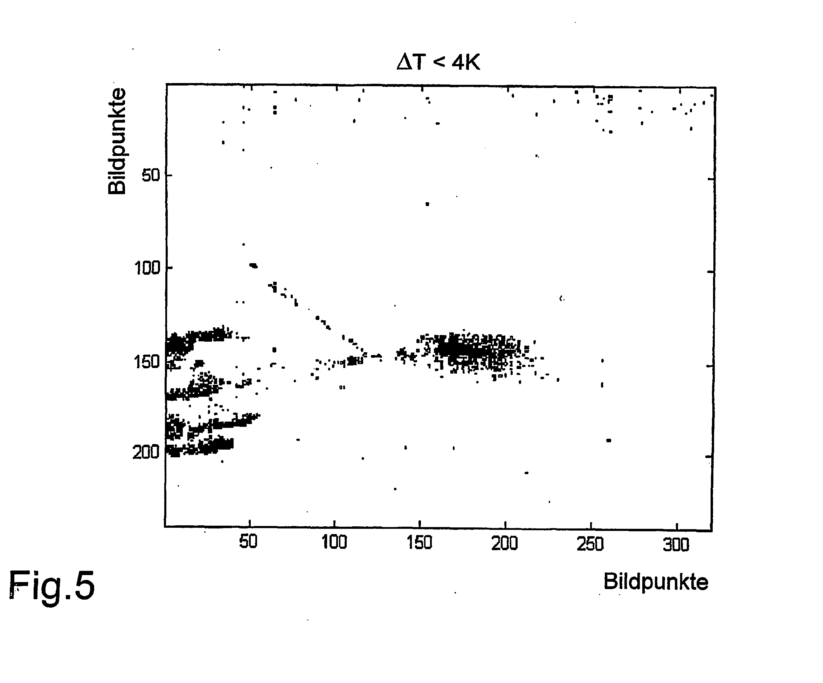

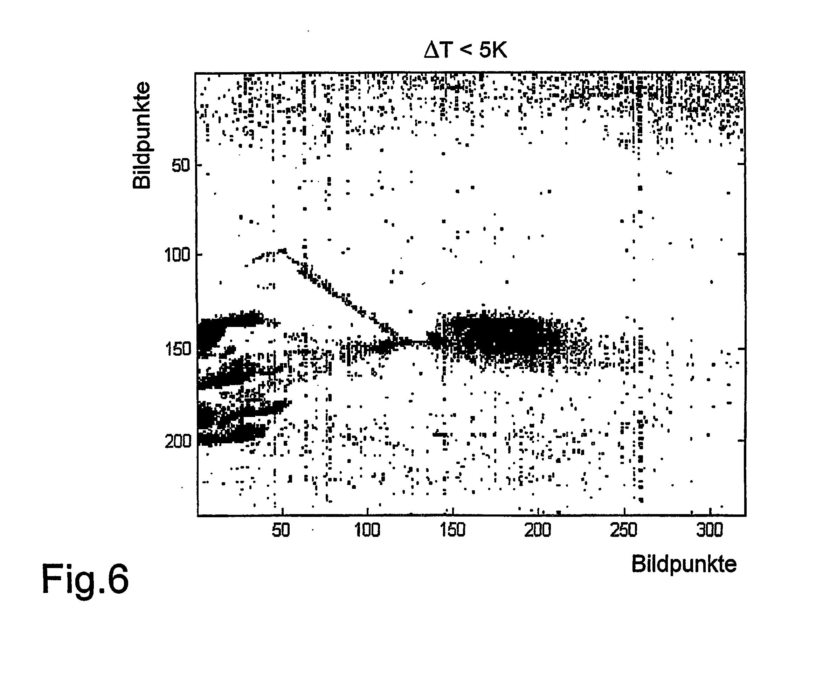

Die in den Fig.3 bis 7 in schwarz/weiß wiedergegebenen Temperaturbilder wurden mit einer Wärmebildkamera mit einem Auflösungsvermögen von 240x320 Punkten am frühen Morgen eines Wintertags aufgenommen. Hierbei wurde, wie in Fig.3 angegeben, mit einem Schwellenwert $\Delta T < 2K$ begonnen. Der Schwellwert wurde schrittweise um jeweils 1K bis auf 6K erhöht.

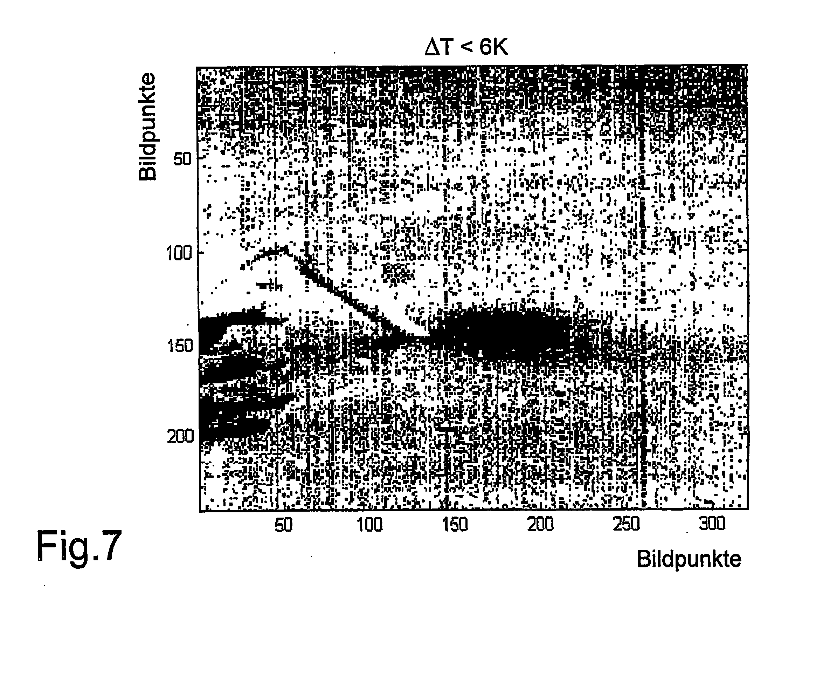

In Fig.3 sind am linken Rand zwischen den Punkten 140 bis 200, auf die Schneespuren 5 zurückzuführende Bildpunkte zu erkennen. Die Bildpunkte etwa in der Mitte der Bildfläche sind auf die durch das über das Schlauchrohr 2 eingeleitete Gas $CO_2$ hervorgerufenen Temperaturänderungen an der Oberfläche der Schneedecke zurückzuführen. Hierbei ist der Schwellwert $\Delta T < 2K$. Schon bei der Erhöhung des Schwellenwerts $\Delta T < 3K$ sind erheblich mehr Bildpunkte zu erkennen. Dies steigert sich bis zu einem Schwellwert $\Delta T < 6K$ in Fig.7 so stark, dass sich weitere Aufnahmen erübrigt haben.

Gemäß der Erfindung werden in einer Lokalisierungsphase zu vorgegebenen unterschiedlichen Zeitpunkten über einen längeren Zeitraum n auch Temperaturbilder genannte Wärmebilder mit n=3, 4, 5... aufgenommen. Anschließend werden die zu den verschiedenen Zeitpunkten von demselben Ort der Erdoberfläche aufgenommenen n Temperaturdifferenzbilder bildpunktsynchron voneinander subtrahiert, und zwar jedes von jedem, wobei sichergestellt wird, dass m geometrisch identische Temperaturdifferenzbilder-Absolutbeträge erhalten werden, und zwar $m = \sum_{l=2}^{n}(l-1)$ .

Im folgenden wird nur noch der Begriff Temperaturdifferenzbilder verwendet, obwohl immer die Absolutbeträge von Temperaturdifferenzbildern gemeint sind.

In den m Temperatur-Differenzbildern wird/werden ein Ort/Orte mit dem niedrigsten Temperaturdifferenzwert festgestellt und gespeichert und es wird geprüft, ob der festgestellte Ort oder die festgestellten Orte in m oder einer Untermenge von k < m Temperaturdifferenzbildern übereinstimmt/übereinstimmen, wobei, falls Übereinstimmung in Form einer signifikanten lokalen Häufung der niedrigsten Temperaturdifferenzwerte in m oder k Temperaturdifferenzbildern feststellbar ist, diese Fundstellen als Fundstellen erster Güte betrachtet werden, während Fundstellen, für die keine Häufung festgestellt wird, als Fundstellen zweiter Güte gespeichert werden.

So werden die Bereiche in der Szene gefunden, die im Zeitraum zwischen den Bildaufnahmen die geringste Temperaturänderung erfahren haben. Wie vorstehend ausgeführt, sind dies die Bereiche, an denen Gas austritt. Es gilt also für Temperaturdifferenzen $T_{DEO}$ (m) und $T_{DEU}$ (m) in von Gas/en thermisch beeinflussten Teilbereichen EO bzw. in thermisch nicht mehr beeinflussten Teilbereichen EU der Temperaturdifferenzbilder der Szene:

$$T_{DEO}(m) \; < \; T_{DEU}(m)$$

Gemäß der Erfindung werden alle Temperaturdifferenzbilder miteinander verglichen und es wird geprüft, ob die Bereiche mit der niedrigsten Temperaturdifferenz an den gleichen Stellen der Szene auftreten. Je häufiger dies der Fall ist, desto größer ist die Wahrscheinlichkeit, dass an der Stelle ein Gasaustritt vorliegt.

Nunmehr wird mittels eines Schwellwertverfahrens bei einem ersten Iterationsschritt für jedes der m Temperaturdifferenzbilder als erster Schwellwert ein Schwellwert festgelegt, der um einen bestimmten Temperaturwert über dem niedrigsten Temperaturdifferenzwert liegt. Hierdurch werden weitere Orte in den m Temperaturdifferenzbildern gefunden und es wird wieder festgestellt, ob diese in geometrischer Nähe oder geringer Abweichung in der Größenordnung von wenigen Bildpunkten von Temperaturdifferenzbild zu Temperaturdifferenzbild und/oder bezogen auf die bereits festgestellten Fundstellen erster Güte liegen.

Falls eine signifikante lokale Häufung festgestellt wird, werden auch diese Fundstellen als Fundstellen erster Güte gespeichert, während bei größeren oder großen Abweichungen von Temperaturdifferenzbild zu Temperaturdifferenzbild und/oder den bereits festgestellten Fundstellen erster Güte diese Fundstellen als solche zweiter bzw. dritter Güte gespeichert werden.

Bei schrittweiser Erhöhung der Schwellwerte wird innerhalb jedes Temperaturdifferenzbildes sowie für alle m oder k Temperaturdifferenzbilder untereinander jeweils geprüft, ob die hinzugekommenen Fundstellen sich in signifikanter Häufung räumlich lückenlos oder nahezu lückenlos an die bereits festgestellten Fundstellen erster, zweiter oder dritter Güte anschließen.

Nach einigen weiteren Iterationsschritten wird bezüglich eines Zusammenwachsens ursprünglich geometrisch getrennter Fundstellen die Lokalisierungsphase abgeschlossen, wenn die Fundstellen erster und zweiter Güte zusammenwachsen und damit die Fundstellen erster Güte als Gasaustritte lokalisiert sind. Dieses Abbruchkriterium wird für jede Fundstelle in der Szene individuell überwacht, da es für Austrittsstellen mit geringem Gasfluss bei niedrigeren Temperaturdifferenzen erreicht wird als bei jenen mit hohem Gasfluss. Der Grund dafür liegt darin, dass der Effekt der thermischen Dämpfung bei starkem Gasfluss ausgeprägter ist. Als Ausdehnung wird ein gefundener Gasaustritt in jedem Differenzbild erkannt; dies dient als Basis zur Bestimmung des Gasflusses im weiteren Verlauf einer möglichen Nutzung der Daten.

Wenn innerhalb weniger erster Iterationsschritte keine signifikante Häufung von Fundstellen erkennbar ist, sondern diese statistisch in den Temperaturdifferenzbildern und im Vergleich der m Temperaturdifferenzbilder auftreten und damit kein Gasaustritt lokalisiert wird, wird die Lokalisierungsphase als erfolglos abgeschlossen, da daraus geschlossen werden kann, dass kein Gasaustritt vorhanden ist.

Zum Bestimmen der Ausdehnung von Fundstellenbereichen wird anstelle eines Vergleichs zwischen den Temperaturdifferenzbilder das Iterationsverfahren nur noch für Temperaturdifferenzbilder fortgesetzt, solange bei einer weiteren Erhöhung des Schwellwerts die festgestellten Fundstellenbereiche erster bis dritter Güte beginnen zusammenzuwachsen, bis die Fundstelle/Fundstellen erster Güte noch eindeutig von derjenigen/denjenigen zweiter Güte zu unterscheiden ist/sind und damit die Ausdehnung der Fundstelle/Fundstellen erster Güte als Ausdehnung des Gasaustritts oder der Gasaustritte bestimmt ist.

Gemäß der Erfindung kann das Verfahren zum Orten von Gasaustritten an der Erdoberfläche erheblich schneller und konzentrierter durchgeführt werden, wenn in einer Lokalisierungsphase nur zwei Temperaturbilder zu verschiedenen Zeitpunkten von demselben Ort der Erdoberfläche aufgenommen und bildpunktsynchron voneinander subtrahiert werden. Hierdurch wird der Absolutbetrag eines Temperaturdifferenzbildes erhalten, in welchem ein Ort/Orte mit dem niedrigsten Temperaturdifferenzwert festgestellt und gespeichert wird/werden.

Auch in diesem Fall wird mittels eines Schwellwertverfahrens für das Temperaturdifferenzbild bei einem ersten Iterationsschritt als erster Schwellwert ein Schwellwert festgelegt, der um einen bestimmten Temperaturwert über dem niedrigsten Temperaturdifferenzwert liegt. Hierdurch werden weitere Orte in dem Temperaturdifferenzbild gefunden und es wird geprüft, ob diese in geometrischer Nähe oder geringer Abweichung in der Größenordnung von wenigen Bildpunkten bezogen auf die bereits festgestellten Fundstelle/n liegen.

Falls eine signifikante lokale Häufung der gefundenen Orte festgestellt wird, werden diese Fundstellen als Fundstellen erster Güte gespeichert, während bei größeren oder großen Abweichungen diese Fundstellen als solche zweiter bzw. dritter Güte gespeichert werden.

Bei schrittweiser Erhöhung der Schwellwerte wird jeweils anschließend geprüft, ob die hinzugekommenen Fundstellen sich in signifikanter Häufung räumlich lückenlos oder nahezu lückenlos an die bereits festgestellten Fundstellen erster, zweiter oder dritter Güte anschließen. Bezüglich eines Zusammenwachsens ursprünglich geometrisch getrennter Fundstellen wird nach einigen weiteren Iterationsschritten die Lokalisierungsphase abgeschlossen, wenn die Fundstellen erster und zweiter Güte zusammenwachsen und damit die Fundstellen erster Güte als Gasaustritte lokalisiert sind.

Auch in diesem Fall wird die Lokalisierungsphase als erfolglos abgeschlossen, wenn innerhalb weniger Iterationsschritte keine signifikante Häufung von Fundstellen erkennbar ist, sondern diese statistisch verteilt in dem Temperaturdifferenzbild auftreten und damit kein Gasaustritt lokalisiert ist; hieraus kann geschlossen werden, dass kein Gasaustritt vorhanden ist.

Zur Steigerung der Genauigkeit der Temperaturkalibrierung kann eine Referenzfläche mit bekanntem spektralem Emissionsgrad ε im Infrarot-Spektralbereich, d.h. in dem Spektralbereich, in dem die Wärmebildkamera arbeitet, an geeigneter, repräsentativer Stelle in die Szene gelegt werden. Hierbei wird die Strahlung der Referenzfläche immer zum gleichen Zeitpunkt wie die jeweiligen Temperaturbilder aufgenommen.

Die Referenzfläche, die beispielsweise eine Metallplatte mit entsprechender Beschichtung sein kann, hat einen Emissionsgrad von annähernd ε=1. Die Strahlung der Referenzfläche wird bei den Temperaturbildern mit erfasst und bei der Temperatur-kalibrierung als Referenz verwendet.

Als Abschluss dieser Auswertephase wird eine Abbildung in Form einer Fundstellenkarte mit der Lage der identifizierten Fundstellen der drei angegebenen Güteklassen erstellt. In dieser Karte ist auch eine beispielsweise eine mittlere Ausdehnung markiert, die als Mittel der in den verschiedenen Differenzbilder ermittelten Ausdehnung bestimmt wird. In die Fundstellenkarte werden Isothermen eingetragen, die die jeweiligen Schwellwerte wiedergegeben und damit Temperaturdifferenzen bedeuten. Sie grenzen die Bereiche der Flächen gleicher Temperaturdifferenzen gegeneinander ab. Abschließend findet ein Vergleich hinsichtlich Lokalisierung und Ausdehnung zwischen allen Differenzbildern statt.

Ist der betrachtete Bodenbereich nicht homogen bezüglich seiner thermischen Eigenschaften, so wirken nicht nur austretendes Gas, sondern auch andere Einflüsse dämpfend auf Temperaturänderungen an der Erdoberfläche, beispielsweise Steine, vitale Vegetation, Schatten beispielsweise auch von am Boden liegenden Ästen und Zweigen, Unterschiede in der Bodenfeuchte, Pfützen oder andere Wasserflächen. Ihre Wirkung ist im kurz- bis mittelfristigen Zeitbereich (Minuten bis wenige Stunden) ähnlich der von austretendem Gas.

Diese störend dämpfenden Effekte müssen erkannt werden, um Fehlinterpretationen zu vermeiden. Dazu dient eine parallel zur Wärmebildkamera betriebene Videokamera, deren Bilder eine Identifizierung der Objekte in der Szene erleichtern. Erfindungsgemäß wird daher in einem weiteren Auswerteschritt ein Vergleich zwischen Videobildern und Fundstellenkarte vorgenommen. Dazu werden beide auf den gleichen Maßstab gebracht, so dass sie zum leichten Vergleich auf- oder nebeneinander gelegt werden können.

Werden in Bereichen erster Güte störende Objekte identifiziert, wird eine genauere Prüfung gegebenenfalls vor Ort vorgenommen, ansonsten dient der Vergleich mit dem Videobild als Bestätigung. Ebenso können die Klassifizierungen in der zweiten und dritten Güte bestätigt oder revidiert werden. Gegebenenfalls sind mehrere Videobilder heranzuziehen, um beispielsweise einen Schatten bei verschiedenen Sonnenständen zu identifizieren.

Es ist auch möglich, die Videoaufnahmen in einem ersten Aufnahme/Auswerteschritt zu verwenden, um bestimmte Bodenbereiche als Gasaustrittsstellen auszuschließen oder als besonders kritisch zu markieren. Dies sind insbesondere Stellen, die von vitaler Vegetation bedeckt und gleichzeitig sonnenbeschienen sind. Vitale Vegetation hat einen dämpfenden Einfluss auf Temperaturänderungen, da die Pflanzen ihre Temperatur durch die Verdunstung von Wasser regeln und so ein Überhitzen bei hoher Lufttemperatur bzw. starker Sonneneinstrahlung verhindern.

Im ersten Auswerteschritt werden also in Farbvideobildern vegetationsbedeckte Bereiche identifiziert und markiert. Es wird geprüft, ob die Vegetation optisch dicht ist, d.h. den Blick zum Boden vollständig versperrt, bodennah (Gras, Kraut) oder bodenfern (Büsche, Bäume) ist. Dies geschieht, indem sowohl die Farbe als auch die Textur analysiert werden. Gegebenenfalls werden andere Informationsquellen, beispielsweise räumlich und/oder spektral hochaufgelöste Luftbild/Linescanneraufnahmen oder daraus gewonnene Kenntnisse, beispielsweise der Leaf Area Index LAI, herangezogen. Es kann auch eine Ortsbegehung durchgeführt werden.

Die Bereiche werden eingehend bei geringer Lufttemperatur und bei indirekter Sonneneinstrahlung, d.h. bei bedecktem Himmel, bei dem nur Luftlicht vorhanden ist, untersucht. Unter diesen Bedingungen unterliegt bodennahe Vegetation, die dem austretenden Gas ausgesetzt ist, auch wenn sie optisch dicht ist, dem thermischen Einfluss des Gases. Auch bei solchen Bereichen kann das erfindungsgemäße Verfahren eingesetzt werden.

Bereiche mit bodenferner Vegetation, die optisch dicht ist, d.h. den Blick zum Boden versperrt, werden als ungeeignet von der Analyse ausgeschlossen. Bei hoher Lufttemperatur bzw. Sonneneinstrahlung werden alle als optisch dicht vegetationsbedeckt identifizierten Bereich von der Analyse ausgenommen.

In einem weiteren Auswerteschritt würde die vorstehend beschriebene Verarbeitung der Infrarot-Bilder erfolgen und das Vorwissen mit einbezogen. Die Serie der zu den Infrarot-Bildern zeitgleich aufgenommenen Videobildern dient auch der Erfassung möglicher nichtthermaler Veränderungen der Szenen, wie Belag, Struktur der Oberfläche, Wasserstand, etc., die im Verlauf der Beobachtung eingetreten sind und Einfluss auf die Auswertung haben können.

Ferner werden besonders fehlerträchtige Wettersituationen anhand der aufgezeichneten meteorologischen Daten erkannt und bei der Auswertung der Wärmebilder berücksichtigt. Dies betrifft beispielsweise hochfrequente Änderungen der Sonneneinstrahlung, wie sie durch eine ziehende, lockere Bewölkung verursacht werden. Darüber hinaus sind auch Unterschiede in der Wärmekapazität und Wärmeleitfähigkeit der Bodenoberfläche und der oberflächennahen Schichten störend.

Vorzugsweise wird das Hauptaugenmerk bei der Bilddatenauswertung auf Wärmebildaufnahmen gelegt, die zu Zeiten relativer Wärmegleichgewichte der Erdoberfläche gemacht wurden. Das sind in jedem Fall Zeiten mit einer ruhigen Wetterlage, möglichst ohne Wind und ohne Niederschläge. Geeignete Zeitpunkte sind auch späte Nachtstunden, die frühen Morgenstunden, windstille Wetterlagen am Tage bei gleichzeitig dicker, geschlossener Bewölkung oder auch niederschlagsfreie Perioden nach längeren Niederschlagsphasen.

Günstige Jahreszeiten sind die vegetationsfreien, nämlich der Winter und das zeitige Frühjahr. Geeignet sind niederschlagsfreie Perioden nach Neuschnee mit dünner, geschlossener Decke auf vorher unbeschneitem Boden und stärkere Schneedecken homogener Dicke über lange, niederschlagfreie Starkfrostperioden. (Warmes Gas erwärmt den Schnee.)

Daher wird Temperaturdifferenzbildern von ausgezeichneten, aber unterschiedlichen Bedingungen (Tag und Nacht) höhere Wertigkeit zugemessen als von weniger unterschiedlichen Bedingungen am Morgen oder Mittag. Bei der Auswahl und Verarbeitung der Temperaturdifferenzbilder, bzw. bei deren Gewichtung im gesamten Verarbeitungsprozess werden diese Informationen genutzt. Der Ablauf aller Prozeduren kann interaktiv mit einer Person, die die Auswertung durchführt, erfolgen, aber auch automatisiert werden.

Zur Überwachung werden die Aufnahmen und Auswertungen an festgestellten Austrittsstellen kontinuierlich vorgenommen. Anhand der zusammengestellten Fundstellenkarten und der eingetragenen Isothermen lässt sich eine zeitliche Veränderung des Gasflusses ermitteln. Strömt mehr Gas, werden die beeinflussten Flächen größer und die Temperaturdifferenzen an den Austrittsstellen werden kleiner. Strömt weniger Gas, werden die beeinflussten Flächen kleiner, die Temperaturdifferenzen der Austrittsstellen werden größer und gleichen sich mehr denen der Umgebung an.

Unter Anwendung der Gesetze der Thermodynamik wird ein Modell der Szenen erstellt, mit dem die thermalen Effekte als Funktion des Gasflusses berechnet werden können. Dabei werden alle oben angeführten Wetterdaten verwendet und im Modell verarbeitet, um die Temperaturverteilung der Erdoberfläche möglichst genau zu berechnen. Ebenso werden Informationen über thermisch relevante Parameter, wie Bodenfeuchte, Wärmekapazität, Wärmeleitfähigkeit, etc., verwendet, bzw. für diesen Zweck zunächst ermittelt.

Gasfluss, Gaszusammensetzung und Gastemperatur können interaktiv variiert werden; die thermischen Eigenschaften des Gases sowie der spektrale Emissionsgrad im Infraroten (dem Spektralbereich der Wärmebildkamera) der Objekte und Materialien der erfassten Szene werden berücksichtigt.

Das Modell wird schließlich verwendet, um in einer Inversionsrechnung aus den mit der Wärmebildkamera gemessenen Temperaturverteilungen den Gasfluss an den Austrittsstellen zu berechnen. Dabei werden insbesondere die bei der Iteration ermittelten und in der Fundstellenkarte eingetragenen Isothermen verwendet, welche Aufschluss über die Geometrie und den Temperaturgradienten sowie die tatsächlichen Temperaturen und damit über die Stärke des Gasflusses geben. Auf diese Weise ist es möglich, den Gasfluss zu überwachen und seine Änderungen festzustellen.

Zur Durchführung des Verfahrens sind ein Wärmebildgerät, welches vorzugsweise im Spektralbereich des thermischen Infrarot (ca. 8 bis 14 μm Wellenlänge) empfindlich ist, und eine Farb- oder Schwarzweiss-Bildkamera, oder auch eine Videokamera vorgesehen. Die Wärmebildkamera kann beispielsweise eine Infrarotkamera mit einem Detektorarray in Form eines Mikrobolometerarrays sein, oder einem Array aus pyroelektrischen Elementen.

Beide Kamerasysteme und ihre dazugehörigen Optiksysteme sind so dimensioniert, dass radiometrische Empfindlichkeit und geometrische Auflösung der Anwendung angepasst sind. Das heißt, aus der vorgesehenen Messentfernung werden die erwarteten thermischen Strukturen von der Wärmebildkamera mit ausreichender radiometrischer und geometrischer Auflösung erfasst, so dass das erfindungsgemäße Verfahren angewendet werden kann, vorausgesetzt die Bild/Videokamera verfügt über eine ausreichende Empfindlichkeit und eine geometrische Auflösung, um die Strukturen und Objekte in der Szene zu identifizieren. Für Nachtaufnahmen mit dem Bild/Videosystem sorgen geeignete Blitzlampen oder Photolampen für ausreichende, künstliche Beleuchtung.

Beide Kamerasysteme verfügen über eine Vorrichtung, mit der das Aufnehmen von Einzelbildern manuell und auch, beispielsweise von einem Computer ferngesteuert, vorgenommen werden kann. Der Computer ist mit Datenerfassungs- und Speichereinrichtungen ausgerüstet, mit deren Hilfe die Bilder der beiden Kamerasysteme zeitgleich erfasst und abgespeichert werden können, wobei automatisch relevante Daten, wie Uhrzeit, Identifikation der Szene mit aufgezeichnet werden.

Die Daten des zugehörigen meteorologischen Messsystems werden in analoger Weise durch den Computer erfasst und gespeichert. Auch hierfür sind entsprechende Datenerfassungs- und Speichereinrichtungen vorgesehen. Das meteorologische Messsystem (Wetterstation) ist Teil der Vorrichtung und enthält Messgeräte für Lufttemperatur, Luftdruck, Luftfeuchte, Sonneneinstrahlung, Wolkenbedeckungsgrad, Windgeschwindigkeit und -richtung.

Vorzugsweise sind in einer bevorzugten Ausführungsform Wärmebildgerät und Bild/Videokamera mit gleicher geometrischer Auflösung und Bildgröße ausgestattet. Sie sind ferner starr miteinander gekoppelt und in ihren optischen Achsen (ihrer Blickrichtung) so zueinander justierbar, dass sie exakt dieselbe Szene hinsichtlich Bildausschnitt und geometrischer Auflösung erfassen.

Um dieses zu erreichen, werden vorzugsweise im infraroten (Wärmebildgerät) und im sichtbaren Spektralbereich (Bild/Videokamera) Detektorarrays mit gleichen geometrischen Parametern (gleiche Anordnung und gleiche Größe der Detektorelemente (picture elements, pixel), sowie Abbildungsoptiken mit gleichen Abbildungseigenschaften verwendet. Beide Bilder können so direkt verglichen werden.

Alternativ können zur Angleichung der Bilder Standardsysteme verwendet werden. Zur Zeit ist bei Standardsystemen die Anzahl der einzelnen Detektorelemente von Detektoarrys kommerziell erhältlicher Wärmebildgeräte klein im Vergleich zu denen von Bild- oder Videokameras. Wärmebildkameras haben beispielsweise ein Array von 240x320 Elementen, während elektronische Kameras über Arrays mit 1000x1000 Elementen und mehr verfügen. Die geometrische Auflösung dieser Systeme ist wesentlich höher als die der Wärmebildgeräte.

Diese Tatsache wird bei der Erfindung in vorteilhafter Weise genutzt, indem in dem hochaufgelösten Bild/ Videobild Strukturen und Objekte besser und eindeutiger identifiziert und klassifiziert werden als in einem Bild geringerer Auflösung.

Hierzu wird entweder mittels einer Zoomoptik der erfasste Bildausschnitt beider Systeme auf gleiche Größe und durch Justierung der Blickrichtung zur Deckung gebracht. Dazu braucht nur ein System mit Zoomoptik ausgestattet zu werden; es können aber auch beide über diese Einrichtung verfügen.

Die aufgezeichneten Bilder beider Systeme einundderselben Szene werden mittels bekannter Verfahren auf die gleiche Anzahl von Bildpunkten gebracht und anschließend auf Deckungsgleichheit überprüft und gegebenenfalls durch Verschiebung gegeneinander zur Deckung gebracht. Auf diese Weise können auch eventuelle Parallaxen bei der Bildaufnahme beider Systeme ausgeglichen werden.

Danach erfolgt die Identifikation und Klassifizierung der Strukturen und Objekte (beispielsweise Steine, Schatten, Äste, Gras, etc.), sowie die Berücksichtigung dieser Information in dem Such- und Bestimmungsverfahren für die Gasaustritte. Vorzugsweise werden Wärmebildsystem und Foto/Videosystem in demselben Gehäuse montiert. Zum Messen von Szenen in verschiedenen Entfernungen verfügen die Kamerasysteme über eine mechanische Einrichtung zum Ausgleich von Parallaxen zwischen beiden Systemen.

Eine rechnerische Überprüfung und Korrektur kann zusätzlich erfolgen. Insbesondere wird die Prüfung der Deckungsgleichheit und gegebenenfalls die Verschiebung, um Deckung zu erreichen, bei den Wärmebildern aller Wärmebildaufnahmen einer Szene durchgeführt, die miteinander verarbeitet werden. So wird sichergestellt, dass bei der Differenzbildung nur geometrische identische Bildpunkte voneinander subtrahiert werden und nur identische Szenen miteinander verglichen werden.

Lecks in Gaspipelines werden unter Verwendung des erfindungsgemäßen Verfahren vorzugsweise aus der Luft detektiert. Dazu befindet sich die Anordnung in einem tiefliegenden Flugzeug oder Hubschrauber und ist durch eine Öffnung in der Zelle des Fluggeräts nach unten zum Boden gerichtet. Das Fluggerät fliegt - automatisch - durch GPS (Global Positioning System) geführt entlang der Trasse der Pipeline. Aus Kostengründen werden vorzugsweise nur zwei Flüge durchgeführt: der erste beispielsweise in der Nacht, kurz bevor es beginnt hell zu werden; der zweite kurz vor Sonnenaufgang, wenn es schon hell ist. Beide Flüge erfolgen auf dem gleichen Flugpfad. Es werden lückenlos Aufnahmen der überflogenen Pipeline aufgenommen.

Anschließend werden die Bilder geometrisch und radiometrisch entzerrt und korrigiert, zur Deckung gebracht und es werden die Temperaturdifferenzbilder erzeugt, auf welche die erfindungsgemäßen Verfahren angewendet werden. Es können auch mehrere Flüge und zu anderen Zeiten und Bedingungen stattfinden. Grundsätzlich sind Aufnahmen bei thermisch unterschiedlichen, aber thermisch stabilen Bedingungen gewünscht; d.h. beispielsweise sollten keine ziehenden Wolken, keine Regenschauer usw. vorhanden sein. Für Messungen aus Fluggeräten ist die Verwendung von Wärmebildgeräten und Bild/Filmsystemen in Form von bekannten Linienabtastern (linescanner) vorteilhaft.

Bei einer Weiterbildung der erfindungsgemäßen Verfahren wird eine Änderung der örtlichen Temperatur T(x, y) über der Zeit ermittelt was auch als Rate der Temperaturänderung bezeichnet werden kann:

$$\frac{dT(x,y)}{dt},$$

wobei x, y die Ortskoordinaten des jeweils betrachteten Punktes sind.

Hierzu wird für ein Differenzbild der Temperaturschwellenwert $\Delta T$, beginnend mit $\Delta T = O$ in bestimmten Schritten stufenweise erhöht. Die Bereiche im Differenzbild, für welche gilt:

$$dT(x, y) < \Delta T$$

werden ermittelt und gespeichert. Anschließend erfolgt die Division durch die Zeit t, welche zwischen der Aufnahme der beiden Bilder liegt. Als Ergebnis wird die Rate der Temperaturänderung erhalten. Die Rate der Temperaturänderung wird für alle Differenzbilder ermittelt und von Differenzbild zu Differenzbild verglichen. Dieser Parameter wird als zusätzliche Bestätigung aufgefundener Gasaustrittsstellen verwendet.

Darüber hinaus dient er als Indikator für die Gasflussmenge. In einer Szene, in welcher die Rate der Temperaturänderung ein breites Spektrum aufweist, sind die Bereiche geringster Rate am stärksten gedämpft. Dies wiederum weist auf eine hohe Gasflussrate, d.h. eine entsprechende Gasmenge als Funktion der Zeit, hin.

**Patentansprüche**

1. Verfahren zum Orten von Objekten in Form von Gasaustritten an der Erdoberfläche, bei welchem mittels einer immer gleich ausgerichteten und eingestellten Wärmebildkamera in einem interessierenden Bereich Infrarot-Strahlungsverteilung an der Erdoberfläche zu vorgegebenen, unterschiedlichen Zeitpunkten in Form von Wärmebildern aufgenommen wird und mittels Kalibrierdaten, die von der regelmäßig radiometrisch kalibrierten Wärmebildkamera vorliegen, die auch Temperaturbilder genannten Wärmebilder in Strahlungsintensitäten kalibriert werden, die in Temperaturwerte umgerechnet werden,
**gekennzeichnet durch** folgende Schritte:

   a) In einer Lokalisierungsphase werden zu vorgegebenen unterschiedlichen Zeitpunkten über einen längeren Zeitraum n Wärmebilder mit n=3, 4, 5... aufgenommen;
   b) die zu den verschiedenen Zeitpunkten von demselben Ort der Erdoberfläche aufgenommenen n Temperaturbilder werden bildpunktsynchron voneinander subtrahiert, und zwar jedes von jedem, wobei sichergestellt wird, dass m geometrisch identische Temperaturdifferenzbilder-Absolutbeträge erhalten werden, und zwar

$$m = \sum_{l=2}^{n}(l-1) ;$$

   c) in den m Temperaturdifferenzbildern wird/werden ein Ort/Orte mit dem niedrigsten Temperaturdifferenzwert festgestellt und gespeichert und es wird geprüft, ob der festgestellte Ort oder die festgestellten Orte in m oder einer Untermenge von k < m Temperaturdifferenzbildern übereinstimmt/übereinstimmen, wobei, falls Übereinstimmung in Form einer signifikanten lokalen Häufung der niedrigsten Temperaturdifferenzwerte in m oder k Temperaturdifferenzbildern feststellbar ist, diese Fundstellen als Fundstellen erster Güte betrachtet werden, während Fundstellen, für die keine Häufung festgestellt wird, als Fundstellen zweiter Güte gespeichert werden;
   d) mittels eines Schwellwertverfahrens wird bei einem ersten Iterationsschritt für jedes der m Temperaturdifferenzbilder als erster Schwellwert ein Schwellwert festgelegt, der um einen bestimmten Temperaturwert über dem niedrigsten Temperaturdifferenzwert liegt, wodurch weitere Orte in den m Temperaturdifferenzbildern gefunden werden und wieder festgestellt wird, ob diese in geometrischer Nähe oder geringer Abweichung in der Größenordnung von wenigen Bildpunkten von Temperaturdifferenzbild zu Temperaturdifferenzbild und/oder bezogen auf die bereits festgestellten Fundstellen erster Güte liegen, wobei, falls eine signifikante lokale Häufung festgestellt wird, auch diese Fundstellen als Fundstellen erster Güte gespeichert werden, während bei größeren oder großen Abweichungen von Temperaturdifferenzbild zu Temperaturdifferenzbild und/oder den bereits festgestellten Fundstellen erster Güte diese Fundstellen als solche zweiter bzw. dritter Güte gespeichert werden;
   e) bei schrittweiser Erhöhung der Schwellwerte wird innerhalb jedes Temperaturdifferenzbildes sowie für alle m oder k Temperaturdifferenzbilder untereinander jeweils geprüft, ob die hinzugekommenen Fundstellen sich in signifikanter Häufung räumlich lückenlos oder nahezu lückenlos an die bereits festgestellten Fundstellen erster, zweiter oder dritter Güte anschließen;
   f) nach einigen weiteren Iterationsschritten wird bezüglich eines Zusammenwachsens ursprünglich geometrisch getrennter Fundstellen die Lokalisierungsphase abgeschlossen, wenn die Fundstellen erster und zweiter Güte zusammenwachsen und damit die Fundstellen erster Güte als Gasaustritte lokalisiert sind.

2. Verfahren nach Anspruch 1, **dadurch gekennzeichnet, dass** die Lokalisierungsphase als erfolglos abgeschlossen wird, wenn innerhalb weniger erster Iterationsschritte keine signifikante Häufung von Fundstellen erkennbar ist, sondern diese statistisch in den Temperaturdifferenzbildern und im Vergleich der m Temperaturdifferenzbilder auftreten und damit kein Gasaustritt lokalisiert ist, und daraus geschlossen wird, dass keiner vorhanden ist.

3. Verfahren nach Anspruch 1, **dadurch gekennzeichnet, dass** in einer Phase zum Bestimmen der Ausdehnung von Fundstellenbereichen anstelle eines Vergleichs zwischen den Temperaturdifferenzbilder, das Iterationsverfahren nur noch für Temperaturdifferenzbilder fortgesetzt wird, solange bei einer weiteren Erhöhung des Schwellwerts die festgestellten Fundstellenbereiche erster bis dritter Güte beginnen zusammenzuwachsen, bis die Fundstelle/Fundstellen erster Güte noch eindeutig von derjenigen/denjenigen zweiter Güte zu unterscheiden ist/sind und damit die Ausdehnung der Fundstelle/Fundstellen erster Güte als Ausdehnung des Gasaustritts oder der Gasaustritte bestimmt ist.

4. Verfahren nach Anspruch 1, **dadurch gekennzeichnet, dass** in einer Lokalisierungsphase zu verschiedenen Zeitpunkten von demselben Ort der Erdoberfläche zwei Temperaturbilder aufgenommen und bildpunktsynchron voneinander subtrahiert werden, wodurch der Absolutbetrag eines Temperaturdifferenzbildes erhalten wird, in dem Absolutbetrag des Temperaturdifferenzbildes ein Ort/Orte mit dem niedrigsten Temperaturdifferenzwert festgestellt und gespeichert wird/werden, wobei

mittels eines Schwellwertverfahrens für das Temperaturdifferenzbild bei einem ersten Iterationsschritt als erster Schwellwert ein Schwellwert festgelegt wird, der um einen bestimmten Temperaturwert über dem niedrigsten Temperaturdifferenzwert liegt, wodurch weitere Orte in dem Temperaturdifferenzbild gefunden werden und geprüft wird, ob diese in geometrischer Nähe oder geringer Abweichung in der Größenordnung von wenigen Bildpunkten bezogen auf die bereits festgestellten Fundstelle/n liegen, wobei, falls eine signifikante lokale Häufung der gefundenen Orte festgestellt wird, diese Fundstellen als Fundstellen erster Güte gespeichert werden, während bei größeren oder großen Abweichungen diese Fundstellen als solche zweiter bzw. dritter Güte gespeichert werden,

bei schrittweiser Erhöhung der Schwellwerte jeweils geprüft wird, ob die hinzugekommenen Fundstellen sich in signifikanter Häufung räumlich lückenlos oder nahezu lückenlos an die bereits festgestellten Fundstellen erster, zweiter oder dritter Güte anschließen, und

bezüglich eines Zusammenwachsens ursprünglich geometrisch getrennter Fundstellen nach einigen weiteren Iterationsschritten die Lokalisierungsphase abgeschlossen wird, wenn die Fundstellen erster und zweiter Güte zusammenwachsen und damit die Fundstellen erster Güte als Gasaustritte lokalisiert sind.

5. Verfahren nach Anspruch 4, **dadurch gekennzeichnet, dass** die Lokalisierungsphase als erfolglos abgeschlossen wird, wenn innerhalb weniger Iterationsschritte keine signifikante Häufung von Fundstellen erkennbar ist, sondern diese statistisch verteilt in dem Temperaturdifferenzbild auftreten und damit kein Gasaustritt lokalisiert ist, und daraus geschlossen wird, dass keiner vorhanden ist.

6. Verfahren nach Anspruch 1, **dadurch gekennzeichnet, dass** eine Referenzfläche mit einem bekannten spektralen Emissionsgrad ε in dem Infrarot-Spektralbereich, in dem auch die Wärmebilder liegen, in angemessenem Abstand von einem festgestellten Gasaustritt aufgestellt wird, und Strahlung dieser Referenzfläche zu dem gleichen Zeitpunkt wie die Wärmebilder aufgenommen wird und zur Steigerung der Genauigkeit als Referenzwert bei einer Temperatur-Kalibrierung verwendet wird.

7. Verfahren nach Anspruch 1, **dadurch gekennzeichnet, dass** als Referenzfläche eine Metallplatte mit einer Beschichtung verwendet wird, die einen Emissionsgrad von ε = 1 hat.

8. Verfahren nach Anspruch 1, **dadurch gekennzeichnet, dass** zum Vermeiden von Fehlinterpretationen aufgrund von kurz- oder mittelfristigen Temperaturänderungen an der Erdoberfläche zeitgleich mit jedem der aufgenommenen Wärmebilder mittels einer entsprechend der Wärmebildkamera auf denselben Bereich der Erdoberfläche ausgerichteten Kamera farbige oder monochrome Bilder im sichtbaren Bereich aufgenommen werden und in einem weiteren Auswerteschritt ein Vergleich oder Vergleiche zwischen Bildern im sichtbaren Bereich und zumindest festgestellten Fundstellenbereichen erster Güte durchgeführt wird/werden.

9. Verfahren nach Anspruch 1, **dadurch gekennzeichnet, dass** als Abschluss der Auswertung eine Abbildung in Form einer Fundstellenkarte mit der Lage der einzelnen identifizierten Fundstellen erster Güte erstellt wird.

10. Verfahren nach Anspruch 9, **dadurch gekennzeichnet, dass** in die Fundstellenkarte Isothermen eingetragen werden, welche den jeweiligen Schwellenwerten und damit Absolutbeträgen von Temperaturdifferenzen entsprechen.

11. Verfahren nach einem der vorhergehenden Ansprüche, **dadurch gekennzeichnet, dass** anhand von kontinuierlich an festgestellten Gasaustritten vorgenommenen Aufnahmen und deren Auswertung sowie anhand von aus den Auswerteergebnissen zusammengestellten Fundstellenkarten und den dort eingetragenen Isothermen zeitliche Veränderungen eines Gasflusses festgestellt werden.

12. Verfahren nach einem der vorhergehenden Ansprüche, **dadurch gekennzeichnet, dass** die Rate einer örtlichen Änderung der Temperatur T(x,y) gemäß $\frac{dT(x,y)}{dt}$ ermittelt wird, wobei mit x und y die Ortskoordinaten und mit t die Zeit bezeichnet sind;

für Temperaturdifferenzbilder der Temperaturschwellenwert ΔT in festgelegten, vorgegebenen Schritten, beginnend bei ΔT = 0, erhöht wird;

die Bereiche in den Temperaturdifferenzbildern, für welche dT(x,y) < ΔT ist, ermittelt und gespeichert werden, eine Division durch die Zeitdauer t vorgenommen wird, welche zwischen dem Aufnehmen von zwei Temperaturbildern verstrichen ist, und

die Temperaturänderungsrate aller Temperaturdifferenzbilder ermittelt und von Temperaturdifferenzbild zu Temperaturdifferenzbild verglichen wird, so dass diese Parameter als zusätzliche Bestätigung gefundener Gasaustritten verwendbar sind.

**13.** Verwenden des Verfahrens nach einem der Ansprüche 1 bis 5 zum Auffinden von Lecks in einer Gaspipeline, wobei mittels der in einem tief fliegenden, mittels GPS geführten Flugzeugs oder Helikopters untergebrachten und nach unten zur Pipeline hin ausgerichteten Anordnung aus einer Wärmebildkamera und einer Video-/und/oder Schwarz-Weißbild-Kamera die zu kontrollierende Pipeline mindestens zweimal vorzugsweise nachts und kurz vor Sonnenaufgang überflogen wird,

die aufgenommenen Bilder geometrisch und radiometrisch entzerrt, korrigiert und zur Deckung gebracht werden, anschließend Temperaturdifferenzbilder-Absolutbeträge erzeugt werden und diese mittels des Verfahrens verarbeitet und ausgewertet werden.

**Claims**

**1.** A method for locating objects in the form of gas leakages on the surface of the earth, wherein, by means of a thermal image camera with constantly identical orientation and setting, the distribution of infrared radiation on the surface of the earth within a range of interest is picked up in the form of thermal images at predetermined different points of time, and wherein, by means of calibrating data provided by the thermal image camera which is radiometrically calibrated at regular intervals, the thermal images, also referred to as temperature images, are calibrated into radiation intensities which are converted into temperature values,
**characterized by** the following steps:

a) In a localizing phase, n thermal images, with n = 3, 4, 5 ... , are taken over a longer period of time at predetermined different points of time;

b) the n temperature images taken of the same site on the surface of the earth at different points of time are subtracted from each other in a pixel-synchronized manner, notably each image from each image, wherein it is safeguarded that m geometrically identical temperature-difference-image absolute values are obtained, notably

$$m = \sum_{l=2}^{n} (l-1);$$

c) among the m temperature difference images, a site/sites having the lowest temperature difference value is/are detected and stored, and it is examined whether the detected site or the detected sites in m temperature difference images or a subgroup comprising k < m temperature difference images is/are coinciding, wherein, if a coincidence is detectable in the form of a significant local accumulation of the lowest temperature difference values in m or k temperature difference images, the thus discovered sites are considered to be discovered sites of first ranking, while discovered sites for which no accumulation has been detected, are stored as discovered sites of second ranking;

d) using a threshold method, there is defined, in a first iteration step, as a first threshold for each of the m temperature difference images, a threshold which is by a specific temperature value above the lowest temperature difference value, whereby further sites are found in the m temperature difference images and it is again detected whether these are in the geometric vicinity or are arranged at a slight deviation in the magnitude of a few pixels from temperature difference image to temperature difference image and/or relative to the already detected discovered sites of first ranking, wherein, if a significant local accumulation is detected, also the thus discovered sites are stored as discovered sites of first ranking, while, in case of larger or large deviations from temperature difference image to temperature difference image and/or from the already detected discovered sites of first ranking, these discovered sites are stored as discovered sites of second and third rankings, respectively;

e) while the thresholds are increased in a step-wise manner, there is respectively examined, within each temperature difference image as well as for all m or k temperature difference images among each other, whether the additionally obtained discovered sites are with significant accumulation, without or nearly without spatial gaps, bordering on the already detected discovered sites of first, second or third rankings;

f) after a plurality of further iteration steps, with regard to a coalescence of originally geographically separate discovered sites, the localizing phase is concluded if the discovered sites of first and second rankings are coalescing and the discovered sites of first ranking are thus localized as gas leakage sites.

2. The method according to claim 1, **characterized in that** the localizing phase is terminated as unsuccessful if within a few first iteration steps no significant accumulation of discovered sites is detectable but such sites appear with random distribution in the temperature difference images and in the comparison of the m temperature difference images and thus no gas leakage is localized, and there is concluded therefrom that no gas leakage exists.

3. The method according to claim 1, **characterized in that**, in a phase for determining the extent of areas of discovered sites, it is provided that, instead of a comparison between the temperature difference images, the iteration method is continued only for temperature difference images as long as, at a further increase of the threshold, the detected areas of discovered sites of first to third rankings begin to coalesce, until the discovered site(s) of first ranking can still be clearly differentiated from that/those of second ranking and thus the extent of the discovered site(s) of first ranking is determined as the extent of the gas leakage (s) .

4. The method according to claim 1, **characterized in that**, in a localizing phase, two temperature images of the same site on the surface of the earth are taken at different points of time and are subtracted from each other in a pixel-synchronized manner whereby the absolute amount of a temperature difference image is obtained,

in the absolute amount of the temperature difference image, a site/ sites with the lowest temperature difference value is/are detected and stored, wherein

using a threshold method for the temperature difference image, there is defined, in a first iteration step, as a first threshold a threshold which is by a specific temperature value above the lowest temperature difference value, whereby further sites are found in the temperature difference image and it is detected whether these are in the geometric vicinity or are arranged at a slight deviation in the magnitude of a few pixels relative to the already detected discovered site(s), wherein, if a significant local accumulation of the discovered sites is detected, these discovered sites are stored as discovered sites of first ranking, while, in case of larger or large deviations, these discovered sites are stored as discovered sites of second and third rankings, respectively;

while the thresholds are increased in a step-wise manner, there is respectively examined whether the additionally obtained discovered sites are with significant accumulation, without or nearly without spatial gaps, bordering on the already detected discovered sites of first, second or third rankings, and

after a plurality of further iteration steps, with regard to a coalescence of originally geographically separate discovered sites, the localizing phase is concluded if the discovered sites of first and second rankings are coalescing and the discovered sites of first ranking are thus localized as gas leakage sites.

5. The method according to claim 4, **characterized in that** the localizing phase is terminated as unsuccessful if within a few iteration steps no significant accumulation of discovered sites is detectable but such sites appear with random distribution in the temperature difference image and thus no gas leakage is localized, and there is concluded therefrom that no gas leakage exists.

6. The method according to claim 1, **characterized in that** a reference surface having a known spectral emittance $\varepsilon$ in the infrared spectral range wherein also the thermal images are arranged, is placed at an appropriate distance from a detected gas leakage, and that radiation from this reference surface is taken up at the same point of time as the thermal images and, for increasing the precision, is used as a reference value in temperature calibration.

7. The method according to claim 1, **characterized in that**, as a reference surface, use is made of a metal plate having a coating with an emittance $\varepsilon = 1$.

8. The method according to claim 1, **characterized in that**, to avoid misinterpretations due to short- or medium-term deviations of temperature on the surface of the earth, colored pictures or monochrome pictures in the visible range are taken simultaneously with each of the taken thermal images by means of a camera which is directed, in correspondence with the thermal image camera, onto the same region of the surface of the earth and, in a subsequent evaluating step, a comparison/comparisons is/are performed between images in the visible range and, at least, detected areas of discovered sites of first ranking.

9.  The method according to claim 1, **characterized in that**, as a conclusion of the evaluation, an image is generated in the form of a map of discovered sites, indicating the positions of the individual discovered sites of first ranking.

10. The method according to claim 9, **characterized in that** isotherms are entered into said map of discovered sites which correspond the respective thresholds and thus to absolute values of temperature differences.

11. The method according to any one of the previous claims, **characterized in that** changes of a gas flow are detected on the basis of pictures continuously taken at detected gas leakage sites, and of the evaluation of such pictures, and on the basis of maps of discovered sites assembled from the evaluation results, and of the isotherms entered in such maps.

12. The method according to any one of the previous claims, **characterized in that** the rate of a local change of the temperature T(x,y) is detected according to

$$\frac{dT(x,y)}{dt}$$

wherein x and y represent the local coordinates and t represents the time;
for temperature difference images, the temperature threshold $\Delta T$ is increased in fixed predetermined steps, starting with $\Delta T = 0$;
those regions in the temperature difference images for which $dT(x,y) < \_\Delta T$, are detected and stored, and a division is performed by the period of time t which has passed between the taking of two temperature images, and the temperature change rate of all temperature difference images is detected and compared from temperature difference image to temperature difference image so that these parameters are useful for additional confirmation of detected gas leakages.

13. Use of the method according to any one of claims 1 to 5 for the detection of leaks in a gas pipeline, wherein, by means of an arrangement comprising a thermal image camera and a video camera and/or monochrome photocamera, which arrangement is installed in a low-flying airplane or helicopter guided by GPS and is directed downward to the pipeline, the pipeline under observation will be flown over at least twice, preferably a night and briefly before sunrise,
the taken images are geometrically and radiometrically rectified, corrected and brought into congruence,
thereafter, temperature-difference-image absolute values are generated and are processed and evaluated by use of said method.

**Revendications**

1.  Procédé pour localiser des objets sous forme de fuites de gaz à la surface de la terre, dans lequel on enregistre, dans une zone concernée, une répartition du rayonnement infrarouge à la surface de la terre au moyen d'une caméra thermique toujours dirigée et réglée de la même façon, à différents moments prédéfinis, sous forme d'images thermiques, et, au moyen de données de calibrage de la caméra thermique calibrée régulièrement par radiométrique, on calibre les images thermiques, également appelées thermogrammes, dans des intensités de rayonnement converties en valeurs de température,
    **caractérisé par** les étapes suivantes :

    a) Dans une phase de localisation, on enregistre n images thermiques avec n = 3, 4, 5, ... à différents moments prédéfinis sur une période prolongée ;
    b) on soustrait les uns des autres les n thermogrammes d'un même lieu à la surface de la terre pris à différents moments de manière synchrone en termes de pixels, et ce chaque image de chaque image, tout en s'assurant d'obtenir m valeurs absolues géométriquement identiques des images thermiques différentielles, à savoir

$$m = \sum_{i=2}^{n} (l-1) \; ;$$

c) sur les m images thermiques différentielles, on détermine et on enregistre un/des lieux ayant la plus faible valeur thermique différentielle et on vérifie si le lieu déterminé ou les lieux déterminés coïncide(nt) avec m ou une quantité inférieure de k < m images thermiques différentielles, et si on peut constater une coïncidence sous forme d'accumulation locale significative des valeurs thermiques différentielles les plus faibles sur m ou k images thermiques différentielles, on considère ces sites comme des sites de première qualité, alors que les sites pour lesquels aucune accumulation n'est constatée sont enregistrés comme sites de deuxième qualité ;

d) au moyen d'un procédé avec valeurs de seuil, dans une première étape d'itération pour chacune des m images thermiques différentielles, on fixe, comme première valeur de seuil, une valeur de seuil qui est supérieure à la valeur thermique différentielle la plus basse d'une certaine valeur de température, moyennant quoi on trouve d'autres lieux sur les 3 images thermiques différentielles et on détermine à nouveau si ceux-ci se trouvent à proximité géométrique ou ont un léger écart de l'ordre de quelques pixels de l'image thermique différentielle, par rapport à l'image thermique différentielle et/ou par rapport aux sites de première qualité déjà déterminés, et si une accumulation locale significative est constatée, on enregistre aussi ces sites en tant que sites de première qualité, alors qu'en cas d'écarts plus importants ou importants d'une image thermique différentielle à l'autre et/ou par rapport aux sites de première qualité déjà déterminés, on enregistre ces sites en tant que sites de deuxième respectivement troisième qualité ;

e) en cas d'augmentation progressive des valeurs de seuil, on vérifie, sur chaque image thermique différentielle ainsi que pour toutes les m ou k images thermiques différentielles entre elles si les sites qui sont venus s'ajouter, jouxtent, à une fréquence significative, sans vide ou pratiquement sans vide dans l'espace les sites, déjà déterminés, de première, deuxième ou troisième qualité ;

f) après quelques autres étapes d'itération, on met fin à la phase de localisation en ce qui concerne une fusion de sites à l'origine géométriquement séparés lorsque les sites de première et de deuxième qualité fusionnent et que, de cette manière, les sites de première qualité sont localisés en tant que fuites de gaz.

2. Procédé selon la revendication 1, **caractérisé en ce que** la phase de localisation se termine sans succès si, dans quelques premières étapes d'itération, on ne peut détecter aucune accumulation significative de sites, mais si ceux-ci apparaissent statistiquement sur les images thermiques différentielles et lors de la comparaison des m images thermiques différentielles et si aucune fuite de gaz n'est localisé et si l'on peut en conclure qu'il n'y en a pas.

3. Procédé selon la revendication 1, **caractérisé en ce que**, dans une phase de détermination de l'étendue des zones sur lesquelles se trouvent les sites, à la place d'une comparaison entre les images thermiques différentielles, on ne poursuit plus le processus d'itération que pour des images thermiques différentielles jusqu'à ce que, dans le cas d'une autre augmentation de la valeur de seuil, les zones de première à la troisième qualité, sur lesquelles se trouvent les sites et qui sont déterminées, commencent à fusionner, jusqu'à ce que le site/les sites de première qualité puisse/puissent encore être distingués de manière nette de celui/ceux de deuxième qualité et que l'étendue du site/des sites de première qualité est ainsi déterminée en tant qu'étendue de la fuite de gaz ou des fuites de gaz.

4. Procédé selon la revendication 1, **caractérisé en ce que**, dans une phase de localisation à différents moments du même lieu à la surface de la terre, on prend deux thermogrammes et on les soustrait l'un de l'autre de manière synchrone en termes de pixels, moyennant quoi on obtient la valeur absolue d'une image thermique différentielle, un lieu/des lieux ayant la valeur de température différentielle la plus basse est/sont constatés et enregistrés en valeur absolue de l'image thermique différentielle,

dans lequel on détermine, au moyen d'une méthode avec valeur de seuil pour l'image thermique différentielle, dans une première étape d'itération en tant que première valeur de seuil, une valeur de seuil qui est supérieure d'une certaine valeur de température à la valeur de température différentielle la plus basse, ce qui permet de trouver d'autres lieux sur l'image thermique différentielle et de vérifier si ceux-ci se trouvent à proximité géométrique ou avec un léger écart de l'ordre de quelques pixels par rapport au/aux sites déjà déterminés et, si on constate une accumulation locale significative des lieux trouvés, on enregistre ces sites en tant que sites de première qualité, alors qu'en cas d'écarts plus importants ou importants, on enregistre ces sites en tant que sites de deuxième respectivement troisième qualité, on vérifie, en cas d'augmentation progressive des valeurs de seuil, si les sites qui sont venus s'ajouter, jouxtent, à une fréquence significative, sans vide ou pratiquement sans vide dans l'espace les sites, déjà déterminés, de première, deuxième ou troisième qualité, et

en ce qui concerne une fusion de sites géométriquement séparés à l'origine, on termine la phase de localisation après quelques autres étapes d'itération lorsque les sites de première et deuxième qualité fusionnent et donc lorsque les sites de première qualité sont localisés en tant que fuites de gaz.

5. Procédé selon la revendication 4, **caractérisé en ce que** la phase de localisation se termine sans succès si dans quelques étapes d'itération, on ne peut détecter aucune accumulation significative de sites, mais si ceux-ci apparaissent statistiquement répartis sur l'mages thermique différentielle et donc si on ne localise aucune fuite de gaz et si on peut en conclure qu'il n'y en a pas.

6. Procédé selon la revendication 1, **caractérisé en ce qu'**on installe une surface de référence ayant un degré d'émission spectrale ε connu dans la zone spectrale infrarouge, dans laquelle se trouvent également les images thermiques, à une distance adaptée d'une fuite de gaz constatée et on enregistre le rayonnement de cette surface de référence au moment où les images thermiques sont prises et on l'utilise pour augmenter la précision en tant que valeur de référence lors d'un calibrage de la température.

7. Procédé selon la revendication 1, **caractérisé en ce qu'**on utilise, comme surface de référence, une plaque métallique comportant un revêtement, qui a un degré d'émission de ε = 1.

8. Procédé selon la revendication 1, **caractérisé en ce que**, pour éviter les interprétations erronées liées à des modifications à court ou moyen terme de la température à la surface de la terre, on enregistre en même temps, avec chacune des images thermiques prises au moyen d'une caméra dirigée, conformément à la caméra thermique, sur la même zone de la surface de la terre, des images en couleur ou monochromes dans le domaine visible et, dans une autre étape d'analyse, on procède à une ou des comparaisons entre les images dans le domaine visible et au moins les zones dans lesquelles des sites de première qualité ont été déterminés.

9. Procédé selon la revendication 1, **caractérisé en ce que**, pour terminer l'analyse, on réalise une reproduction sous forme de carte de sites indiquant la position des différents sites de première qualité identifiés.

10. Procédé selon la revendication 9, **caractérisé en ce qu'**on inscrit sur la carte des sites, des isothermes qui correspondent aux valeurs de seuil respectives et donc aux valeurs absolues des différences de température.

11. Procédé selon l'une quelconque des revendications précédentes, **caractérisé en ce qu'**on constate des modifications dans le temps d'un flux de gaz à l'aide des clichés pris en continu sur des fuites de gaz constatées et à leur analyse ainsi qu'à l'aide de cartes de sites établies à partir des résultats de l'analyse et des isothermes qui y sont inscrits.

12. Procédé selon l'une quelconque des revendications précédentes, **caractérisé en ce qu'**on détermine le taux d'une modification locale de la température T (x, y) avec $\dfrac{dT(x,y)}{dt}$, x et y désignant les coordonnées du lieu et t le temps ;

pour les images thermiques différentielles, on augmente la valeur de seuil de la température $\Delta T$ par paliers prédéfinis, à partir de $\Delta T = 0$ ;
on détermine et on enregistre les zones sur les images thermiques différentielles, pour lesquelles dT(x, y) < $\Delta T$, on divise par la durée t écoulée entre la prise de deux thermogrammes et
on détermine le taux de modification de la température de toutes les images thermiques différentielles et d'une image thermique différentielle à l'autre, de manière à pouvoir utiliser ces paramètres en tant que confirmation supplémentaire de fuites de gaz trouvées.

13. Utilisation du procédé selon l'une quelconque des revendications 1 à 5 pour trouver des fuites dans un gazoduc, dans lequel, au moyen de la disposition constituée d'une caméra thermique et d'une caméra vidéo et/ou noir et blanc placée dans un avion ou un hélicoptère volant à basse altitude et guidé par GPS, et dirigée vers le bas sur le gazoduc, on survole les gazoducs à contrôler au moins deux fois, de préférence la nuit et peu avant le lever du soleil, on élimine la distorsion géométrique et radiométrique des images prises, on les corrige et on les superpose, on calcule ensuite des valeurs absolues des images thermiques différentielles et on les traite et on les exploite au moyen du procédé.

Fig.1

Fig.2

Fig.3

Fig.4

Fig.5

Fig.6

Fig.7